# EUROPEAN PATENT SPECIFICATION

(11) **EP 3 467 636 B1**
(45) Date of publication and mention of the grant of the patent: **10.06.2020**
(21) Application number: 18196086.5
(22) Date of filing: 21.09.2018
(51) Int. Cl.: G06F 3/12

(54) **METHOD FOR COMPLETING A STACK OF SHEETS IN AN OUTPUT HOLDER OF A PRINTING SYSTEM**
VERFAHREN ZUR VERVOLLSTÄNDIGUNG EINES BOGENSTAPELS IN EINEM AUSGABEHALTER EINES DRUCKSYSTEMS
PROCÉDÉ POUR COMPLÉTER UNE PILE DE FEUILLES DANS UN SUPPORT DE SORTIE D'UN SYSTÈME D'IMPRESSION

(30) Priority: 03.10.2017 EP 17194628
(43) Date of publication of application: 10.04.2019
(73) Proprietor: Canon Production Printing Holding B.V., 5914 CA Venlo (NL)
(72) Inventor: GERRITS, Antonius M., 5914 CA Venlo (NL); RIJBROEK, Dennis H.L., 5914 CA Venlo (NL)
(74) Representative: Canon Production Printing IP Department

(56) References cited:
- EP-A2- 2 256 618
- US-A- 5 859 711
- US-A1- 2010 091 319
- US-A1- 2012 188 573

## Description

### Field of the invention

The present invention relates to method for completing a stack of sheets in an output holder attached to a printing device, the output holder configured to hold a stack of sheets printed upon by the printing device according to a plurality of print jobs submitted to the printing device, the printing device comprising a print controller for controlling the receiving of the plurality of print jobs in a print job queue and the printing of the plurality of print jobs according to the print job queue, the method comprising the step of the print controller receiving a trigger comprising information for a completion of the stack.
The present invention further relates to a printing system which is configured to apply the method according to the present invention.

### Background of the invention

Nowadays productivity plays an important role in printing systems. Print jobs are printed consecutively by means of a printing device. After printing upon sheets by the printing device the sheets are transported to an output holder attached to the printing device. The output holder may be part of the printing device or coupled to an outlet of the printing device. The output holder has a maximum allowed capacity expressed in a maximum number of sheets in the output holder - mostly media dependent - , expressed in a maximum weight of the amount of sheets in the output holder, and/or expressed in a maximum stack height of the sheets in the output holder. The sheets form a stack of sheets in the output holder. Sheets or sets of sheets may be finished by means of finishing equipment being part of the printing system. The printing system has a logging system which registers consecutive print jobs and also registers a stack completion of the output holder.

Several scenarios for completion of the stack from the output holder are generally known.

In a first scenario, during a stack completion the stack of sheets may be ejected from inside the output holder towards outside the output holder by transporting means. After the stack ejection the empty output holder is ready for receiving the next sheets from the printing device. The printing device receives print jobs and schedules the received printing jobs in a print job schedule. After a trigger for example via an eject button, the stack of sheets of already printed print jobs is ejected from the output holder.

In a second scenario a trigger for completion of the stack is received by the print controller without an ejection of the stack from the output holder. For example, the printing device or more specifically the output holder comprises a detecting means for detecting that the stack of sheets reaches the maximum allowed capacity and a completion of the stack is to be performed. This may be a stop of printing sheets to the output holder and, if possible, moving next printed sheets to another output holder.

The two scenarios have disadvantages. By completing a stack of sheets from the output holder, sheets of a plurality of print jobs may be stacked. The operator who cares about the stack of sheets does not know which print jobs are present in the completed stack or which parts of print jobs are present in the completed stack. Also the sheets may be undistinguishable as distinct jobs in the stack. US 2012/188573 A1 discloses a method according to the pre-characterising portion of claim 1. US 2010/091319 A1 discloses a similar method.

It is an objective of the present invention to overcome these disadvantages in a user friendly and productive manner.

### Summary of the invention

According to the present invention the method according to claim 1 is provided.

According to an embodiment the method comprises the stack completion is intended to be performed immediately or before the start of the printing of a next print job residing in the print job queue or after the currently being printed print job has been completely printed or during the printing of the currently being printed print job or at a planned moment in the future. The moment in the future may for example be planned by means of the print job queue.

According to an embodiment the method comprises the step of, after printing the summary job on the at least one stack trailer sheet on top of the stack, ejecting the stack from the output holder, the stack including the at least one stack trailer sheet.

According to an embodiment the method comprises the step of providing a confirmation window on a user interface of the printing engine in order to allow the user to confirm the printing of at least one stack trailer sheets before completion of the stack.

According to an embodiment the stack summary comprises information about of at least one out of identifiers of print jobs in the stack at the intended moment of completion, an amount of sheets in the stack at the intended moment in time of completion of the stack, a height of the stack at the intended moment in time of completion of the stack, a number of print jobs in the stack at the intended moment in time of completion of the stack, a number of sets, records or pages of a partial print job in the stack at the intended moment in time of completion of the stack, a weight of the stack at the intended moment in time of ejection of the stack, a customer name property among the print jobs in the stack at the intended moment in time of completion of the stack, and a maximum sheet size of the stack at the intended moment in time of completion of the stack. The information may be coded as a bar code or as a QR code, for example to enable an easier automatic post-processing.

A print job list of print job identifiers like job names of print jobs printed in the stack may be part of the summary. In a glance the operator is able to see which print jobs are part of the stack.
In case of a very large print job the summary indicates that the print job is printed over multiple stacks and indicates a number which of the different stacks is the current stack, e.g. "3^{rd} stack for job NNN", or even "3^{rd} stack of 10 for job NNN".
The summary may also indicate that the stack contains only a part of the last printed job on the stack.

According to an embodiment a user interface for the printing device is configured to display the print job queue and the method comprises the steps of displaying the print job queue on the user interface, and receiving the trigger from an action applied to the print job queue displayed on the user interface. The action may be a user action or an action automatically generated by the print controller of the printing device.

According to an embodiment the method comprises the step of automatically detecting that the output holder is full by means of sensing devices residing in the printing device, and receiving the trigger due to the detection.

According to an embodiment the method comprises the step of automatically and timely receiving the trigger from a rule based system comprising completion rules derived from properties of the print jobs printed in the stack.

According to an embodiment the step of ejecting the stack comprises the step of transferring the stack from an internal output holder of the printing device to an external output holder of the printing device.

According to an embodiment the method comprises the step of temporarily stopping ejection of sheets of print jobs to the stack in the internal output holder as to enable a purposively emptying of the external output holder. This is advantageous since printing to the internal output holder may be continued hereafter.

The invention also relates to a printing system according to claim 12.

The invention also relates to a non-transitory recording medium according to claim 13.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention, which is defined by the claims, will become apparent to those skilled in the art from this detailed description.

### Brief description of the drawings

FIG. 1 shows schematically a printing system configured to apply the method according to the present invention.
FIG. 2 - 4 show schematically user interface windows for representing the print job queue of a printing system according to the method of the invention.
FIG. 5 shows schematically a user interface window of a job submitter for submitting a print job to the printing system according to the method of the invention.
FIG. 6 shows schematically a user interface window for representing the print job queue of the printing system according to the method of the invention.
FIG. 7 shows schematically the user interface window of the job submitter provided with a feedback window according to the method of the invention.
FIG. 8 shows schematically the user interface window of the print job queue provided with a feedback window according to the method of the invention.
FIG. 9 shows a flow diagram of a method according to the present invention.
FIG. 10 - 11 show examples of the stack trailer sheet according to the present invention.

### Detailed description of the embodiments

A number of embodiments will now be described in conjunction with the drawings, in which same reference numerals refer to like elements.

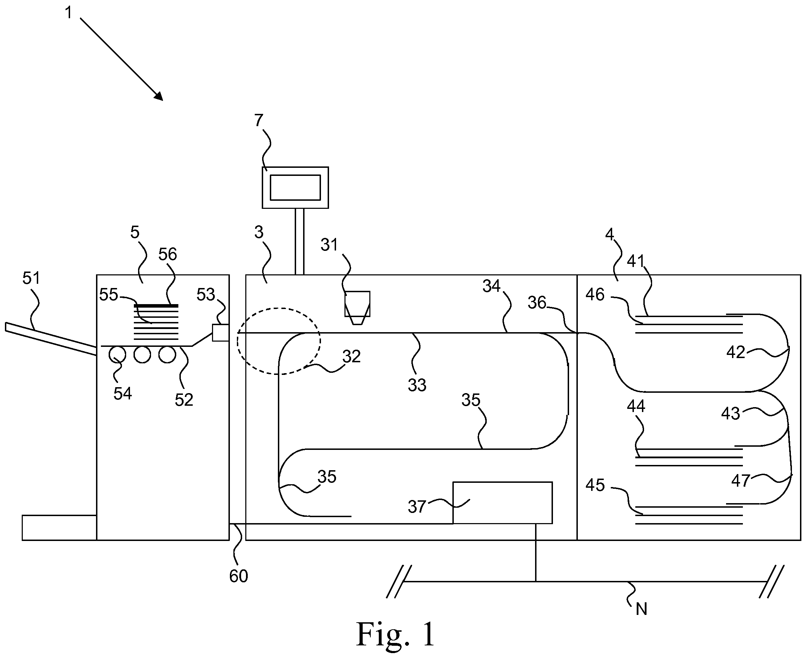

FIG. 1 shows schematically a printing system 1 in which the method according to the present invention is applicable. The printing system 1, for purposes of explanation, is divided into an output section 5, a print engine and control section 3, a local user interface 7 and an input section 4. While a specific printing system is shown and described, the disclosed embodiments may be used with other types of printing systems such as ink jet print systems, electrographic print systems, etc.

The output section 5 comprises at least one output holder 52 for holding a stack of printed image receiving material. The printed image receiving material is transported from the print engine and control section 3 via an inlet 53 to the output section 5. When a stack completion command is invoked by a print controller 37, the print controller 37 retrieves a stack summary of print jobs contained in the printed stack 55 from memory of the printing system 1. The memory may be residing inside the print controller 37 or from a network location connected to the printing system 1 via a digital network N. A summary job is created which comprises the stack summary. The summary job is printed by a print head or print assembly 31 on at least one stack trailer sheet 56 on top of the stack 55. In an embodiment guiding means 54 are activated in order to eject the stack 55 including the at least one stack trailer sheet 56 on the output holder 52 outwards to an external output holder 51. The operator can take the completed stack 55 from the external output holder 51 for further processing the outputted documents in the stack 55.

The output section 5 may also comprises finishing equipment for finishing a sheet or a set of sheets, like stapling, punching, perforating, binding, gluing, etc.
Finishing equipment may be added to or replace the external holder 51 for further finishing the completed stack 55. The internal output holder 52 may not be reachable by an operator. In the latter case the operator cannot take the stack 55 from the internal output holder 52 for further processing, but he can only take the stack 55 from the external output holder 51 for further processing.

According to an alternative embodiment the task for the stack completion comprises a temporary stop of ejecting sheets of print jobs to an external output holder in the print job queue in order to enable a purposively emptying of the output holder according to the present invention. While the ejection of the sheets has stopped, the operator is able to empty the output holder at the intended moment of stack ejection. The emptying action is manually done by the operator or may be done by robotic means. The printing by the printing device may be stopped while the operator is emptying the output holder. However, a printing system having a large internal buffer for holding sheets does not have to stop printing, but can just stop the transfer of sheets from the large internal buffer to the output holder.

According to an alternative embodiment (not shown) the printing system comprises a first output holder and a second output holder and sheets are automatically transferred to the second output holder when the first output holder is full and the stack in the first output holder is completed according to the invention. In this case the printing system does not have to stop printing either.

The output section 5 is digitally connected by means of a cable 60 to the print engine and control section 3 for bi-directional data signal transfer.

The print engine and control section 3 comprises a print engine and the print controller 37 for controlling the printing process. The print controller 37 is a computer or server or a workstation, connected to the print engine and connected to the digital environment of the printing system, for example a network N for transmitting a submitted print job to the printing system. In FIG. 1 the print controller 37 is positioned inside the print engine and control section 3, but the print controller 37 may also be positioned outside the print engine and control section 3 in connection with the network N. The print engine comprises a print head or print assembly 31 for ejecting and/or fixing marking material to image receiving material and a paper path 34, 32, 35 for transporting the image receiving material from an entry point 36 of the print engine and control section 3 to the inlet 53 of the output section 5. The print head or print assembly 31 is positioned near the paper path section 34. The print head or print assembly 31 may be an inkjet print head, a direct imaging toner assembly or an indirect imaging toner assembly. While an image receiving material is transported along the paper path section 34, the image receiving material receives the marking material from the print head or print assembly 31. A next paper path section 32 is a flip unit for selecting a different subsequent paper path for simplex or duplex printing of the image receiving material.
When the image receiving material has been printed upon, the image receiving material is transported to the inlet 53 of the output section 5.
The input section 4 may comprise at least one input holder 44, 45, 46 for holding the image receiving material before transporting the sheets of image receiving material to the print engine and control section 3. Sheets of image receiving material are guided from the input holders 44, 45, 46 by guiding means 42, 43, 47 to an outlet 36 for entrance in the print engine and control section 3.
The local user interface is suitable for displaying user interface windows for controlling the print job queue residing in the print controller 37. In another embodiment a computer in the network N has a user interface for displaying and controlling the print job queue of the printing system 1. Once print jobs are printed, the print job properties are stored in the memory for later use in the print job stack summary report. Also a stack completion command for the current stack 55 received by the print controller 37 is stored in memory in order to determine which print jobs are going to be part of the next stack in the output holder 52.

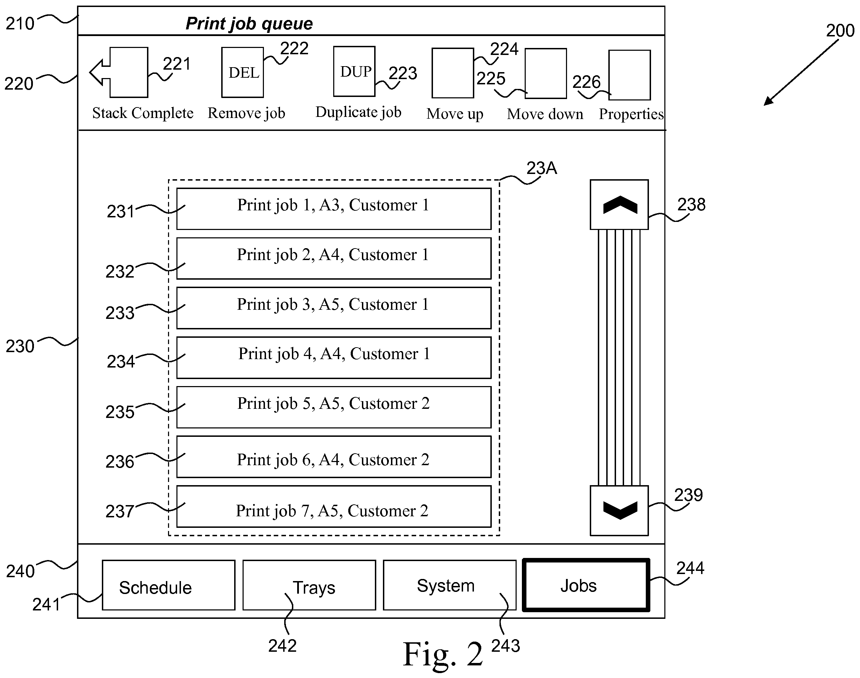

FIG. 2 shows a user interface window 200 of the printing system 1 according to the present invention. In an alternative embodiment part of the functionality - like buttons - of this user interface window is designed as hardware buttons near the user interface window 200. The user interface window 200 is opened at the local user interface 7 in FIG. 1 and shows a representation of the print job queue residing in the print controller 37 in FIG. 1.

The user interface window 200 comprises a title section 210, a user action section 220, a print job queue section 230 and a navigation section 240.

The user action section 220 comprises image items 221 - 226 to be selected for executing actions on the print job queue 23A in the print job queue section 230. A first image item 221 represents a stack completion action according to the present invention. The stack completion action may start immediately after activating the first image item 221 which leads to a stack completion action command to the print controller 37 of the printing system 1. The stack completion action may also start after a selected print job in the print job queue 23A and thus may be made visual in the print job queue 23A.

In an alternative embodiment the user action section comprises a first stack completion image item representing a stack completion action after a selected print job from the print job queue 23A and a second stack completion image item representing a stack completion action before a selected print job from the print job queue 23A.

The stack completion action command leads to the retrieval of the stack summary report by the print controller 37, the creation of the stack summary print job, and to the printing of the stack summary report by the print head or print assembly 31 on top of the stack to be completed.
A second image item 222 represents a job removal action.
A third image item 223 represents a job duplication action.
A fourth image item 224 represents a move up action.
A fifth image item 225 represents a move down action.
A sixth image item 226 represents an action to retrieve and display properties of a selected print job in a properties window.

According to an embodiment a sensor may be present in the output holder 52 for detecting timely that the output holder is full or nearly full. Detection should be timely so that the stack summary still fits to the stack to be completed. A sensor signal from the sensor may lead to an immediate stack completion command for the print controller 37.

The navigation section 240 comprises a first image item 241 for navigating to a schedule with a timeline and media needed for the print jobs, a second image item 242 for navigating to an overview of the input trays and the content of the input trays, a third image item 243 for navigating to the system settings and a fourth image item 244 for navigating to the print jobs in the print job queue 23A. In the user interface window 200 the fourth image item 244 is selected.
According to an embodiment, a system setting for enabling or disabling the printing of the stack summary may be part of the system settings of the printing system 1. In case of a stack completion command via the first image item 221 the system setting for enabling or disabling the stack summary report is checked. When said system setting is disabled no stack summary report will be printed on top of the stack to be completed. When said system setting is enabled the stack summary report will be printed on top of the stack to be completed. According to a further embodiment the system setting is defined per output holder.

The print job queue section 230 comprises a representation of the print job queue 23A. The print job queue 23A comprises at least one print job. FIG. 2 shows a plurality of print jobs 231 - 237 in the print job queue 23A in a sequence order from top to bottom. A first print job 231 will be printed really soon after the print job that is currently printed by the printing device is ready. A last print job 237 will be printed if the preceding print jobs 231 -236 are ready. Each print job 231 - 237 in the print job queue 23A is selectable by a mouse or by a finger or stylus in case of a touch screen. A sequence order of the print jobs 231 - 237 in the print job queue 23A may be changed by selecting a print job in the print job queue 23A and then activating the fourth image item 224 or the fifth image item 225 in order to move the selected print job one position up or down respectively in the print job queue 23A. In a further embodiment in case of a touch screen a position of a print job 231 - 237 in the print job queue 23A may be changed by dragging and dropping the appropriate print job to another position in the print queue. The print job queue 23A is scrollable by activating an upward scrolling button 238 or a downward scrolling button 239. Each print job 231 - 237 in the print job queue 23A may be displayed with a number of properties of the print job, such as an identifying name of the print job ("Print job 1"), a size of the image receiving material to be used for the print job ("A3"), a customer name corresponding to the customer where the print job has to be delivered "Customer 1", etc. For convenience reasons a small relevant number of properties for each print job 231 - 237 is displayed in the print job queue 23A. The properties of the print job may be all or selectively used for and/or printed in the stack summary report according to the invention.

By means of a number of examples advantageous planning of the completion of the stack is described hereinafter.

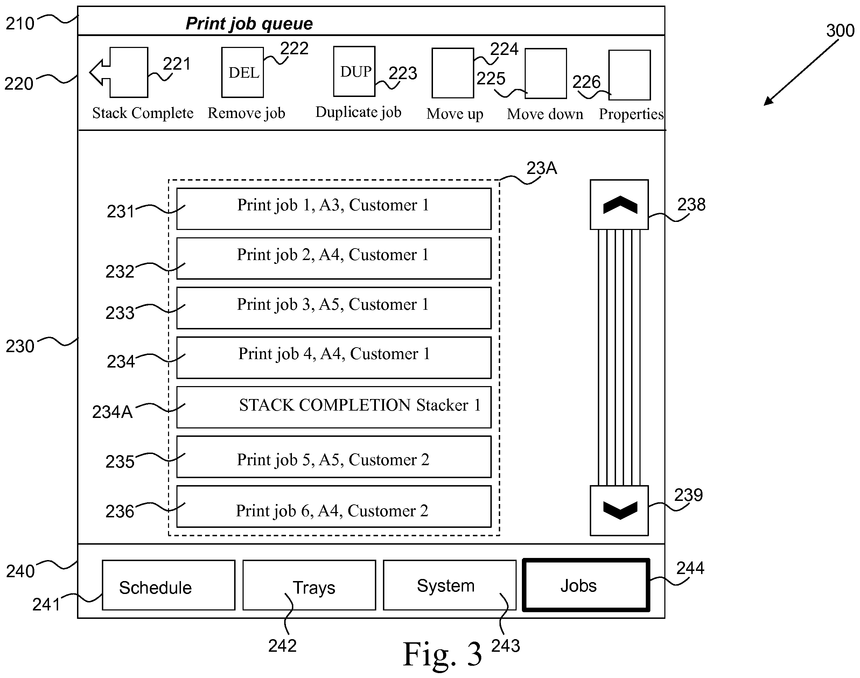

In a first example the operator has noticed that the first four print jobs 231 - 234 have to be delivered to a first customer ("Customer 1"), while the last three print jobs 235 - 237 have to be delivered to a second customer ("Customer 2"). Therefore the operator may want to have a completion of the stack after the fourth print job 234, the last print job for the first customer, and before the fifth print job 235, the first print job for the second customer. The operator selects the fourth print job 234 and activates the first image item 221. FIG. 3 shows in a window 300 a task image item 234A for a stack completion of a first output holder ("Stacker 1") of the printing system according to the present invention. The task image item 234A is positioned in the representation of the print job queue 23A between the fourth print job 234 and the fifth print job 235. According to a further embodiment the user interface is configured to provide an optional request window to the operator to enter a customer message for the stack summary.

In an embodiment of the present invention the sixth image item 226 is used for retrieving and changing of properties of a selected print job in the print job queue 23A and is also used for retrieving and changing of properties of a selected stack completion, e.g. the properties of the task image item 234A. A property of the task image item 234A may be the identification of the output holder. This is in particular advantageous in case of more than one output holder. For example, the planned stack completion may be changed from a stack completion of the first output holder "Stacker 1" into a stack completion from a second output holder - for example "Stacker 2" - by means of the activation of the sixth image item 226 after selection of the task image item 234A. For example, proof print jobs are delivered to a top output holder of the printing system 1 and a stack completion may be planned after a proof print job has been printed. In another embodiment the planned stack completion is changed to a stack completion of the stacker of a last completed print job.
In another embodiment the properties of an item 231 - 236, 234A in the print job queue 23A are displayed after double clicking or double tapping on the item.

In general the task image item 234A - when displayed in the print job queue 23A - may be selected by a mouse of by a touch on the task image item 234A. The selected task image item 234A may be moved along the print job queue 23A by a mouse movement, by a drag-and-drop action in case of a touch screen or by means of the fourth image item 224 ("move up") and/or the fifth image item 225 ("move down") in order to change the moment of stack completion with respect to the print jobs 231 - 237 in the print job queue 23A.

The task image item 234A is displayed in the form of a bar. Other shapes may be envisioned like a flag icon before a print job item 231 - 236, a flag icon after a print job item 231 - 236, a modified print job item 231 - 236 with an upper corner provided with an icon to represent a stack completion before the print job corresponding to the print job item, a modified print job item 231 - 236 with an lower corner provided with an icon to represent a stack completion after the print job corresponding to the print job item, etc.

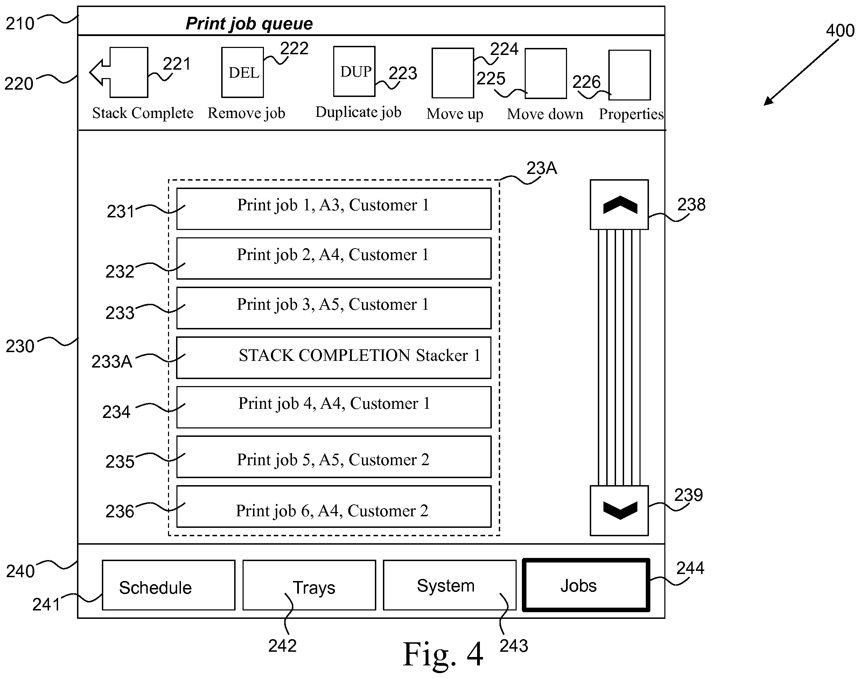

In a second example the operator has noticed that the first three print jobs 231 - 233 have a size property, "A3", "A4", "A5", respectively which sizes are in a decreasing order. The stack of the first three print jobs 231 - 233 will therefore form a kind of pyramidal stack since the later print job will end up on top of the previous print job. Print jobs in such a pyramidal stack are easy visible and easy to process. The size of the media used for the stack summary report may be independent from or the same as the size of the last printed sheet of a print job on the stack to be completed.
The fourth job 234 has a size property of "A4", which is larger than the size "A5" of the preceding print job 233. Therefore the operator may want to have a completion of the stack after the third print job 233 and before the fourth print job 234. The operator selects the third print job 233 and activates the first image item 221. The result of this action is shown in FIG. 4.

FIG. 4 shows in a window 400 a task image item 233A for a stack completion of a first output holder ("Stacker 1") of the printing system according to the present invention. The task image item 233A is positioned in the representation of the print job queue 23A between the third print job 233 and the fourth print job 234.
According to the same principle of pyramidal stack completion a stack completion according to the present invention may also be inserted after the fifth print job 235 and before the sixth print job 236.

The first example and the second example may be combined. The first example and the second example show stack ejections 234A, 233A respectively planned by the operator and based on the properties of the print jobs 231 - 237 in the print job queue 23A. According to an embodiment the criteria employed by the operator may be encoded in software for a rule base system comprising rules for a stack completion based on the properties of the print jobs in the print job queue of the printing system. The rule based system may be part of the print controller 37 of the printing system 1 according to the present invention. The application of the rules in the rule based system leads to an automatic stack completion without intervention of the operator via one of the windows 200, 300, 400 shown in FIG. 2, FIG. 3 and FIG. 4 respectively.

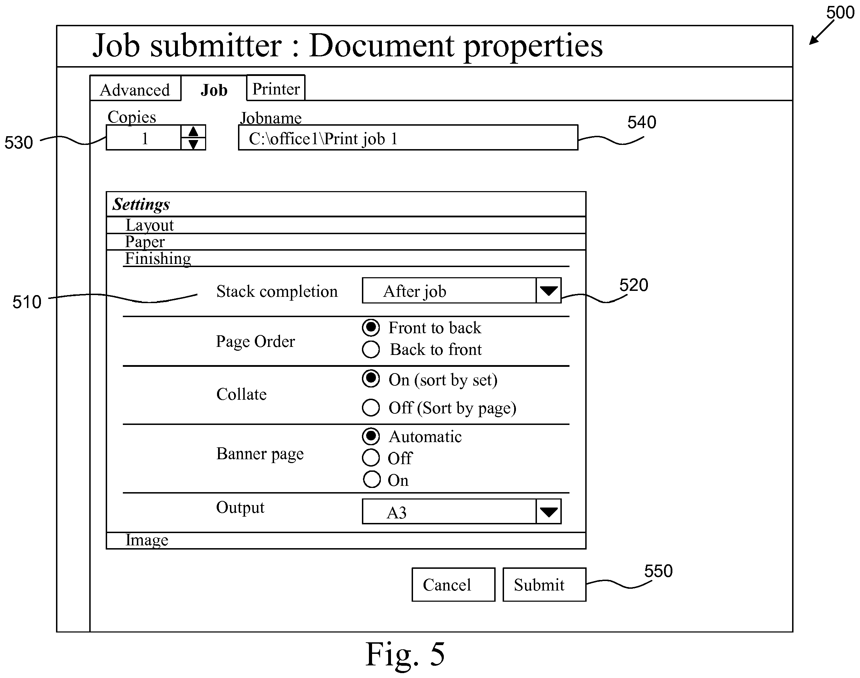

FIG. 5 shows a window 500 of a job submitter for submitting print jobs to the printing device. The job submitter may be part of a pre-processing application or a printer driver. The pre-processing application may comprise a hot folder mechanism for receiving document files in a hot folder - or another mechanism like a JDF/JMF submission - and automatically retrieving the document files subsequently from the hot folder in order to transmit the document files subsequently to the printing device.
FIG. 5 shows a window 500 comprised in a printer driver application.
From three tabs "Advanced", "Job", "Printer", the second tab "Job" is selected.
A number of copies may be selected in a first entry field 530. A job name may be entered in a second entry field 540. A plurality of settings may be set for a layout of the print job and media of the print job. Image parameters and finishing parameters may be set. The finishing parameters are selected and expanded. Finishing parameters concern a page order, a collate option, a banner page option and an output option. According to the present invention one of the finishing parameters is a stack completion option 510 for defining a completion of the stack before or after the print job. In a selection box 520 an option "After job" is selected, meaning that after this print job has been printed a stack completion will take place. Another option is "Before job" (not shown), meaning that before this print job is started to be printed a stack completion will take place or before printed sheets of this print job arrive at the output holder. Another option is "Before job and after job" (not shown), meaning that before this print job is started to be printed a stack completion will take place and after this print job has been printed a stack ejection will take place. Another option is "No stack completion" (not shown), meaning that before as well as after this print job no stack completion will take place. Another option is "Based on system rules" (not shown), meaning that no stack completion is specified according to the stack completion option 510 in the window 500, but the print controller 37 of the printing device determines a moment of stack completion via a rule based system or the operator determines a moment of stack completion via the user interface displaying the print job queue (See FIG. 2). In the case of the use of a rule based system the stack completion option of "No stack completion" may be interpreted by the print controller as no stack completion despite any existing stack completion rule in the rule based system which rule relates to the same moment before or after the print job, i.e. a stack completion is prohibited before and after the print job.
Another option is "Add custom stack summary message" (not shown) with an entry field for providing the custom stack summary message.
Another option is "Print stack summary" with the radio buttons "yes", "no" and "system default".

The stack completion option 510 is displayed in the form of a selection drop-down box. Other forms of the stack completion option may be envisioned, for example a set of radio buttons.

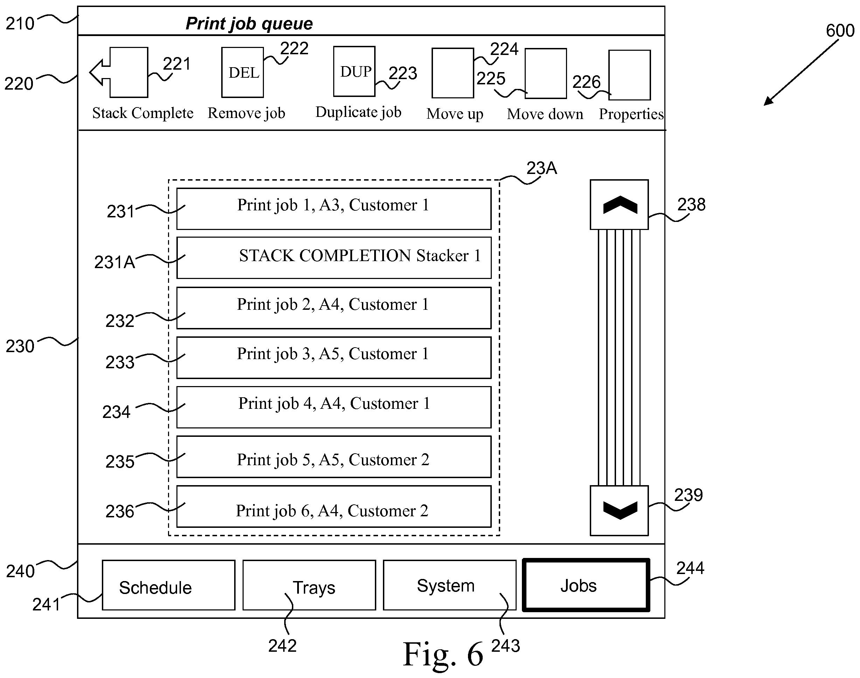

The selected print job in the second entry field 540 has a job name "print job 1". The print job named "print job 1" may be submitted to the printing device by means of the submit button 550.
Assuming that after the "print job 1" is submitted to the printing device, five other print jobs, named "print job 2" up to "print job 6", are also submitted, each of these five other print jobs having the stack completion option "No stack ejection", the print job queue will contain at least six print jobs and one stack completion task as shown in FIG. 6. After the first print job 231 a task 231A for a completion of the stack is scheduled in the print job queue 23A. After the stack completion task 231A, the other five print jobs 232 - 236 are scheduled in the print job queue 23A.

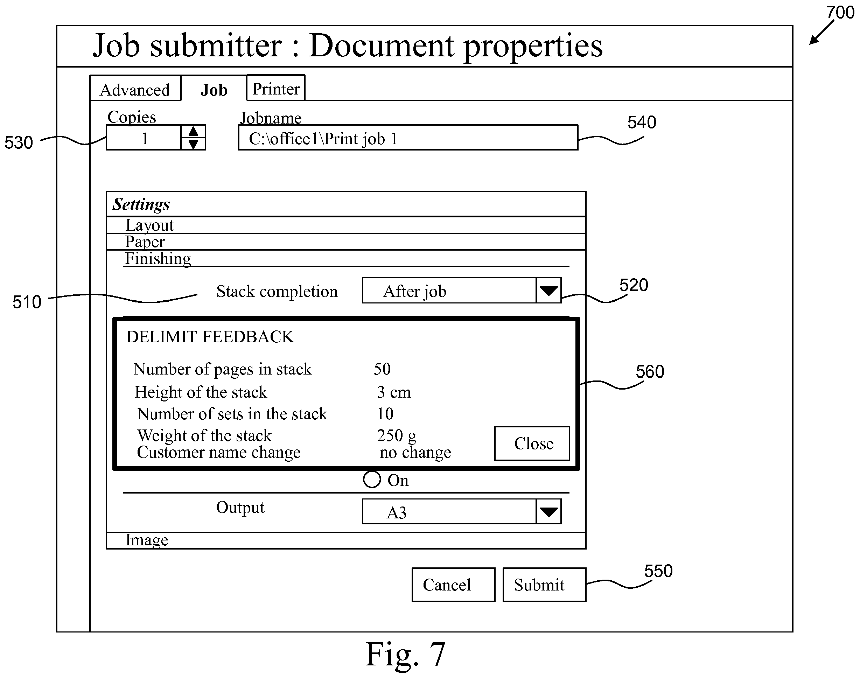

FIG. 7 shows a window 700 of the job submission application after the print job named "print job 1" has been submitted by means of the submit button 550. After the submission a first feedback window 560 is displayed. The first feedback window 560 shows first feedback regarding the intended moment in time of the completion of the stack after the print job named "print job 1" has been printed. The provided first feedback may comprise the same information as in the stack summary report, namely a list of print job identifiers of print jobs residing in the stack at the intended moment in time of completion of the stack, a predetermined number of sheets in the stack at the intended moment in time of completion of the stack, a predetermined height of the stack at the intended moment in time of completion of the stack, a predetermined number of print jobs in the stack at the intended moment in time of completion of the stack, a predetermined number of sets of a print job in the stack at the intended moment in time of completion of the stack, a predetermined weight of the stack at the intended moment in time of completion of the stack, a change of a customer name property among the print jobs in the stack at the intended moment of completion of the stack, or a maximum size of the sheets in the stack.
It is noted that a list of print job identifiers of print job going to reside in the stack at the intended moment in time of completion of the stack may not be known as a print job has not yet been submitted to the printing system or a submitted print job is not yet arrived in the print job queue. In those cases only information about the already printed jobs and information about the current job may be provided in the stack summary. The first feedback window 560 shows what properties the stack could have when the print jobs being currently part of the print job queue 23A before and including the selected print job 540 are printed to form the stack.

The first feedback window 560 mentions the number of sheets in the stack (50), a height of the stack (3 cm), a number of sets of a print job in the stack (10), a weight of the stack (250 g), a customer name change "no change". The number of sheets in the stack and the maximum size of the sheets in the stack may be of interest for further finishing of the stack. The height of the stack may be of interest for further packaging the stack, for example in a box which has a predetermined height. The weight of the stack may be of interest for further shipping cost of the stack and/or of interest for working conditions of the operator.
The first feedback is generated by retrieving from the print controller 37 information about planned print jobs and planned stack completions in the print job queue. The submitted print job may invoke an information request for the print controller 37 to gather this information and send it back to the job submitter application.
The first feedback window 560 may already pop up before the submission of the print job named "print job 1" when a stack completion option in the selection box 520 is changed. Such a change of the stack completion option may result in sending the information request as mentioned hereinbefore from the job submitter to the print controller of the printing device.

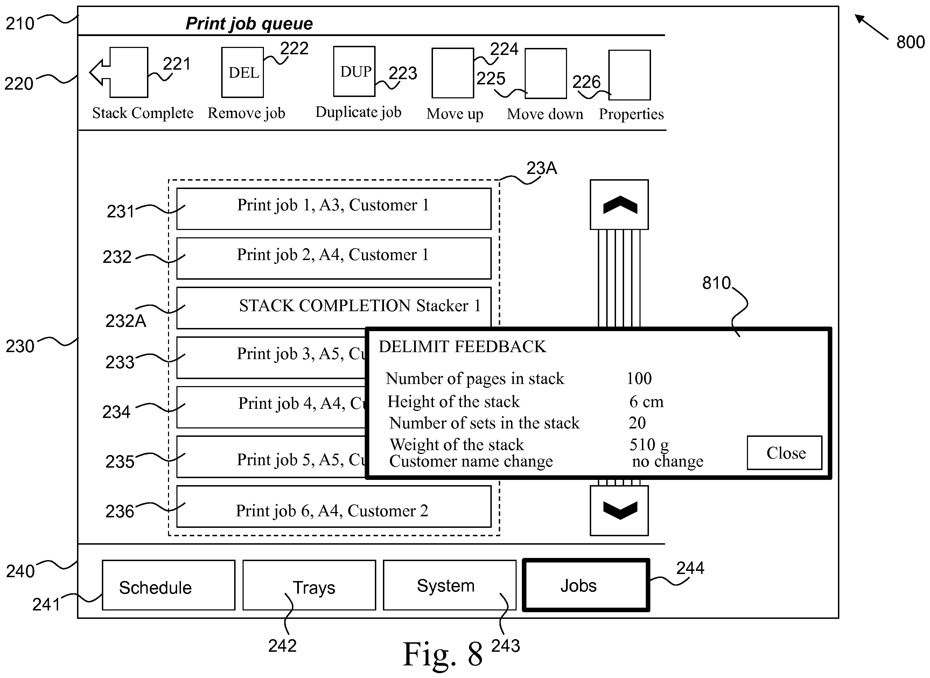

In another case the operator has noticed that the output holder is not yet full and wants to change the moment of stack completion from a moment of stack completion after the first print job 231 in FIG. 6 into a moment of stack completion after the second print job 232 in FIG. 6. Therefore the operator moves the stack completion task item 231A by means of drag-and-drop or by means of mouse dragging or by means of selection and the move down image item 225 to a position after the second print job 232 and before the third print job 233. The result of the movement is shown in FIG. 8.

FIG. 8 shows the stack completion task item 232A as a result of the movement of the moment of stack completion in FIG. 6, after the second print job 232. According to an embodiment the method of the invention provides second feedback regarding the changing of the intended moment in time of the completion of the stack. The second feedback is displayed in FIG. 8 in a second feedback window 810 near the stack completion task item 232A. The information of the stack completion feedback in the second feedback window 810 is accordance with the moment of the planned stack completion after the second print job 232. The second feedback may comprise the same information as in the stack summary report, namely at least one out of a list of print job identifiers of print jobs residing in the stack at the intended moment in time of completion of the stack, a predetermined number of sheets in the stack at the intended moment in time of completion of the stack, a predetermined height of the stack at the intended moment in time of completion of the stack, a predetermined number of print jobs in the stack at the intended moment in time of completion of the stack, a predetermined number of sets of a print job in the stack at the intended moment in time of completion of the stack, a predetermined weight of the stack at the intended moment in time of completion of the stack, a change of a customer name property among the print jobs in the stack at the intended moment of completion of the stack, and a maximum size of the sheets in the stack at the intended moment of completion of the stack. A movement of the stack completion task item 232A to another print job lower in the print job queue 23A may imply that a stack completion will occur before the stack completion task item 232A in the print job queue is reached.

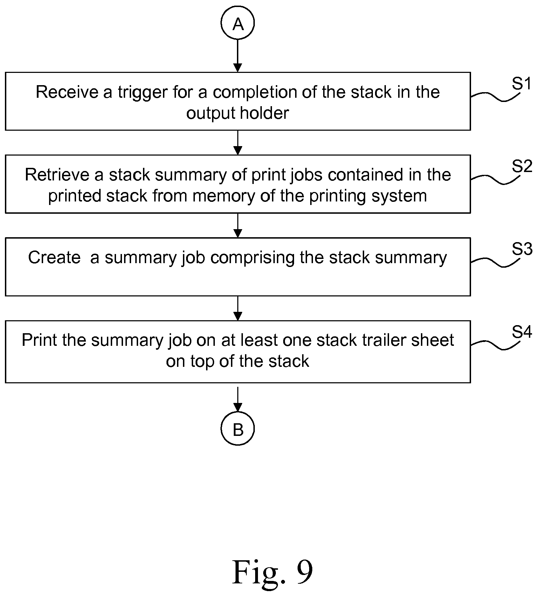

FIG. 9 shows a flow diagram of an embodiment of the method according to the present invention. A starting point A leads to the first step S1.

In a first step S1 of the method a trigger is received by the print controller of the printing device. The trigger comprises information for a completion of the stack. The trigger may be originated from a sensor in the output holder of the printing system in case the output folder is full or nearly full. The trigger may be originated from the use of a stack completion button on the user interface of the printing system or from the use of a stack completion button on the output holder itself. The trigger may be originated from the use of a stack completion image item on a user interface screen displaying the print job queue. A completion of the stack means that adding of new printed sheets to the already formed stack has to be stopped immediately, after the current print job, after a planned print job in the future, etc. The stack is then completed after the steps S2, S3 and S4 have been performed. In case a stack completion is planned to be performed in the future, the print jobs in the print job queue are printed according to the sequence order of the print jobs in the print job queue until the stack of sheets is completed at a moment in time in accordance with the planning of the stack completion in the future.

In a second step S2 a stack summary of print jobs contained in the printed stack is retrieved from memory of the printing system. The memory may be inside the print controller of the printing system or residing in a network location in a network connected to the printing system.

In a third step S3 a summary job is created comprising the stack summary. The summary job is submitted to the print engine at the appropriate moment in time.

In a fourth step S4 the summary job is printed on at least one stack trailer sheet on top of the stack. The completed stack may be manually removed from the output holder by an operator. Besides here-before mentioned information, the summary job may also comprise further actions to be performed on the completed stack, for example further finishing action or logistic actions. The at least one stack trailer sheet may be obtained from an arbitrary input holder. By doing so, the at least one stack trailer sheet may have other media properties like size, weight, colour, than the printed sheets of the print jobs in the completed stack. By having these other media properties the stack trailer pages on top of the completed stack are easily discernible from the sheets of the print jobs in the completed stack.

In an optional fifth step the completed stack is automatically removed or ejected from the output holder for further actions to be applied to the completed stack.

The method ends in an end point B.

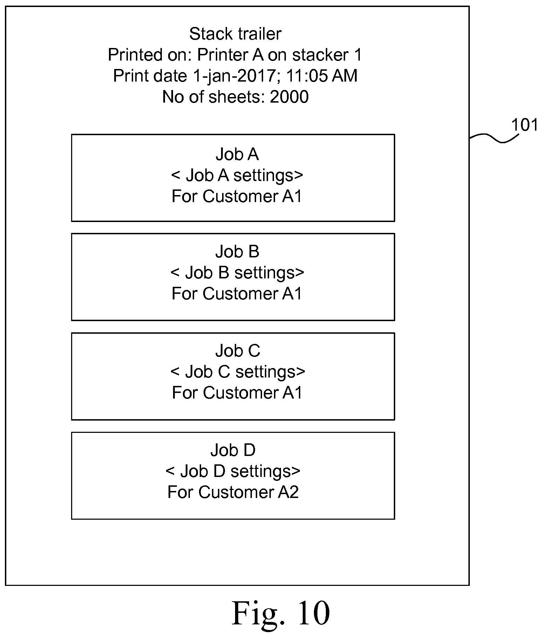

FIG. 10 shows a first example of a stack trailer sheet 101. The sheets in the stack are printed on printer A to an output holder "stacker 1". The print date and time and the number of sheets in the stack are mentioned on the stack trailer 101. The stack contains 4 jobs, e.g. job A, job B, job C and job D visualised by rectangles. Print job settings of the print jobs are mentioned in the rectangles. Also the customer who has ordered the print job is mentioned in the corresponding rectangle for the print job.

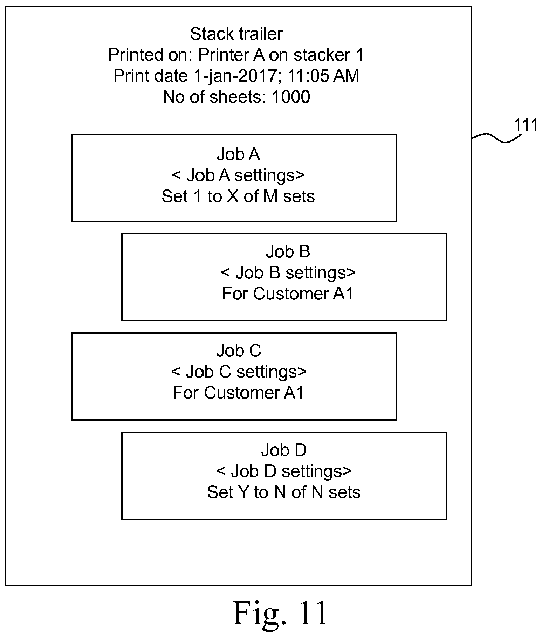

FIG. 11 shows a second example of a stack trailer sheet 111. The sheets in the stack are printed on printer A to an output holder "stacker 1". The print date and time and the number of sheets in the stack are mentioned on the stack trailer 111. The stack contains 4 jobs, e.g. job A, job B, job C and job D visualised by rectangles. The rectangles are about one about off set as how the sheets are actually staggered in the stack. Print job settings of the print jobs are mentioned in the rectangles. Only a part of job A, namely the set 1 to X of a number of total sets M, is contained in the stack. Also only a part of job D, namely the set Y to N of a number of total sets N, is contained in the stack.

It is noted that the stack trailer sheets 101, 111 in FIG. 10 and FIG. 11 respectively are merely examples of stack trailer sheets in the light of the invention. Other examples may be envisioned in the scope of the claims of the invention.

The skilled person will recognize that other embodiments are possible within the scope of the appended claims.

## Claims

1. Method for completing a stack (55) of sheets in an output holder (52) attached to a printing device (3), the output holder (52) configured to hold the stack (55) of sheets printed upon by the printing device (3) according to a plurality of print jobs (231-237) submitted to the printing device (3), the printing device (3) comprising a user interface (7) and a print controller (37) for controlling the receiving of the plurality of print jobs in a print job queue (23A) and the printing of the plurality of print jobs (231-237) according to the print job queue (23A), the method comprising the steps of
- the print controller (37) receiving a trigger comprising information for a completion of the stack,
- retrieving a stack summary of print jobs contained in the printed stack from memory of the printing device,
- creating a summary job comprising the stack summary, and
- printing the summary job on at least one stack trailer sheet (56, 101, 111) on top of the stack,
**characterized in that** the method comprises the step of in case the stack intended to be completed comprises a part of a specific print job, indicating in the summary which part of the specific print job is present in the stack intended to be completed, and
either the step of receiving the trigger comprises receiving the trigger from a local user interface being part of the output holder or the user interface is configured to display a user operable item for completing the stack from the output holder and the step of receiving the trigger comprises the sub-step of activating the user operable item.

2. The method according to claim 1, wherein the stack completion is intended to be performed immediately or before the start of the printing of a next print job residing in the print job queue or after the currently being printed print job has been completely printed or during the printing of the currently being printed print job or at a planned moment in the future.

3. The method according to claim 1 or 2, wherein the method comprises the step of, after printing the summary job on the at least one stack trailer sheet on top of the stack, ejecting the stack from the output holder, the stack including the at least one stack trailer sheet.

4. Method according to any of the preceding claims, wherein the method comprises the step of providing a confirmation window on a user interface of the printing engine in order to allow the user to confirm the printing of at least one stack trailer sheets before completion of the stack.

5. Method according to any of the preceding claims, wherein the stack summary comprises information about of at least one out of identifiers of print jobs in the stack at the intended moment of completion, an amount of sheets in the stack at the intended moment in time of completion of the stack, a height of the stack at the intended moment in time of completion of the stack, a number of print jobs in the stack at the intended moment in time of completion of the stack, a number of sets, records or pages of a partial print job in the stack at the intended moment in time of completion of the stack, a weight of the stack at the intended moment in time of ejection of the stack, a customer name property among the print jobs in the stack at the intended moment in time of completion of the stack, and a maximum sheet size of the stack at the intended moment in time of completion of the stack.

6. Method according to any of the preceding claims, wherein a user interface for the printing device is configured to display the print job queue and the method comprises the steps of
- displaying the print job queue on the user interface, and
- receiving the trigger from an action applied to the print job queue displayed on the user interface.

7. Method according to claim 6, wherein the action is a user action.

8. Method according to any of the preceding claims, wherein the method comprises the step of automatically detecting that the output holder is full by means of sensing devices residing in the printing device, and receiving the trigger due to the detection.

9. Method according to any of the preceding claims, wherein the method comprises the step of automatically and timely receiving the trigger from a rule based system comprising completion rules derived from properties of the print jobs printed in the stack.

10. Method according to claim 3, wherein the step of ejecting the stack comprises the step of transferring the stack from an internal output holder of the printing device to an external output holder of the printing device.

11. Method according to claim 10, wherein the method comprises the step of temporarily stopping ejection of sheets of print jobs to the stack in the internal output holder as to enable a purposively emptying of the external output holder.

12. Printing system (1) for printing print jobs (231-237) on sheets, the print system (1) comprising
- a printing device (3),
- a user interface (7),
- an output holder (52) attached to the printing device (3) configured to hold a stack (55) of sheets printed upon by the printing device (3),
- a digital print job receiver for receiving the print jobs (231-237) to be printed by the printing device (3),
- a print controller (37) for controlling the printing of the print jobs (231-237) to the output holder (52),
wherein the print controller (37) is configured
- to receive a trigger comprising information for a completion of the stack (55), the stack (55) completion to be performed immediately or before the start of the printing of a next print job residing in the print job queue (23A) or during the currently being printed print job has been completely printed,
- to retrieve a stack summary of print jobs contained in the printed stack (55) from memory of the printing device (3),
- to create a summary job comprising the stack summary, and
the printing device (3) is configured
- to print the summary job on at least one stack trailer sheet (56, 101, 111) on top of the stack (55) upon receipt of the trigger,
**characterized in that** the print controller (37) is configured, in case the stack intended to be completed comprises a part of a specific print job, to indicate in the summary which part of the specific print job is present in the stack intended to be completed, and
either the trigger is received from a local user interface being part of the output holder or the user interface (7) is configured to display a user operable item for completing the stack from the output holder and the print controller (37) is configured to receive the trigger by activating the user operable item.

13. A non-transitory recording medium comprising computer executable program code configured to instruct a computer to perform the method according to any of the claims 1 - 11.

## Patentansprüche

1. Verfahren zur Vervollständigung eines Stapels (55) von Bögen in einem Ausgabehalter (52), der an einer Druckvorrichtung (3) angebracht ist, wobei der Ausgabehalter (52) dazu konfiguriert ist, den Stapel (55) der Bögen aufzunehmen, auf die durch die Druckvorrichtung (3) in Übereinstimmung mit einer Vielzahl von Druckaufträgen (235-237) gedruckt wurde, die der Druckvorrichtung (3) zugeführt wurden, wobei die Druckvorrichtung (3) eine Benutzerschnittstelle (7) und eine Druckersteuerung (37) aufweist zur Steuerung des Empfangs der Vielzahl der Druckaufträge in einer Druckauftragsschlange (23A) und zur Steuerung des Druckens der Vielzahl der Druckaufträge (231-237) gemäß der Druckauftragsschlange (23A), welches Verfahren die folgenden Schritte aufweist:
- Empfang, durch die Druckersteuerung (37), eines Triggersignals, das Information für eine Vervollständigung des Stapels enthält,
- Empfang einer Stapelzusammenfassung von Druckaufträgen, die in dem gedruckten Stapel enthalten sind, aus einem Speicher der Druckvorrichtung,
- Erzeugen eines Zusammenfassungsauftrags, der die Stapelzusammenfassung enthält, und
- Drucken des Zusammenfassungsauftrags auf wenigstens einen Stapelabschlussbogen (56, 101, 111) auf der Oberseite des Stapels,
**dadurch gekennzeichnet, dass** das Verfahren den folgenden Schritt aufweist:
wenn der Stapel, der vervollständigt werden soll, einen Teil eines spezifischen Druckauftrags enthält, angeben, in der Zusammenfassungung, welcher Teil des spezifischen Druckauftrags in dem Stapel vorhanden ist, der vervollständigt werden so, und
entweder der Schritt des Empfangs des Triggersignals den Empfang des Triggersignals von einer lokalen Benutzerschnittstelle einschließt, die Teil des Ausgabehalters ist, oder
die Benutzerschnittstelle dazu konfiguriert ist, ein von einem Benutzer betätigbares Element für die Vervollständigung des Stapels aus dem Ausgabehalter anzuzeigen, und der Schritt des Empfangs des Triggersignals den Teilschritt der Aktivierung des vom Benutzer betätigbaren Elements einschließt.

2. Verfahren nach Anspruch 1, bei dem die Vervollständigung des Stapels dazu vorgesehen ist, ausgeführt zu werden unmittelbar vor dem Start des Druckens eines nächsten Druckauftrages, der sich in der Druckauftragsschlange befindet oder nachdem der aktuell gedruckte Druckauftrag vollständig gedruckt worden ist oder während des Druckens des aktuell gedruckten Druckauftrags oder zu einem geplanten Zeitpunkt in der Zukunft.

3. Verfahren nach Anspruch 1 oder 2, welches Verfahren den folgenden Schritt aufweist:
nach dem Drucken des Zusammenfassungsauftrags auf den wenigstens einen Stapelabschlussbogen auf der Oberseite des Stapels, Auswerfen des Stapels aus dem Ausgabehalter, wobei der Stapel den wenigstens einen Stapelabschlussbogen enthält.

4. Verfahren nach einem der vorstehenden Ansprüche, welches Verfahren den folgenden Schritt aufweist:
Bereitstellen eines Bestätigungsfensters auf einer Benutzerschnittstelle des Druckgerätes, um es dem Benutzer zu ermöglichen, das Drucken des wenigstens einen Stapelabschlussbogens vor der Vervollständigung des Stapels zu bestätigen.

5. Verfahren nach einem der vorstehenden Ansprüche, bei dem die Stapelzusammenfassung Information über wenigstens eines der folgenden Elemente enthält:
Kennungen von Druckaufträgen in dem Stapel zu dem vorgesehenen Zeitpunkt der Vervollständigung, eine Menge von Bögen in dem Stapel zu dem vorgesehenen Zeitpunkt der Vervollständigung des Stapels, eine Höhe des Stapels zu dem vorgesehenen Zeitpunkt der Vervollständigung des Stapels, eine Anzahl von Druckaufträgen in dem Stapel zu dem vorgesehenen Zeitpunkt der Vervollständigung des Stapels, eine Anzahl von Sätzen, Listen oder Seiten eines Teil-Druckauftrages in dem Stapel zu dem vorgesehenen Zeitpunkt der Vervollständigung des Stapels, ein Gewicht des Stapels zu dem vorgesehenen Zeitpunkt des Auswurfes des Stapels, ein Merkmal eines Kundennamens unter den Druckaufträgen in dem Stapel zu dem vorgesehenen Zeitpunkt der Vervollständigung des Stapels, und eine maximale Bogengröße des Stapels zu dem vorgesehenen Zeitpunkt der Vervollständigung des Stapels.

6. Verfahren nach einem der vorstehenden Ansprüche, bei dem eine Benutzerschnittstelle der Druckvorrichtung dazu konfiguriert ist, die Druckauftragsschlange anzuzeigen, und das Verfahren die folgenden Schritte umfasst:
- Anzeigen der Druckauftragsschlange auf der Benutzerschnittstelle, und
- Empfang des Triggersignals von einer Aktion, die an der auf der Benutzerschnittstelle angezeigten Druckauftragsschlange vorgenommen wird.

7. Verfahren nach Anspruch 6, bei dem die Aktion eine Benutzeraktion ist.

8. Verfahren nach einem der vorstehenden Ansprüche, mit dem Schritt der automatischen Detektion, dass der Ausgabehalter voll ist, mit Hilfe von Sensoreinrichtungen, die sich in der Druckvorrichtung befinden, und des Empfangs des Triggersignals infolge der Detektion.

9. Verfahren nach einem der vorstehenden Ansprüche, mit dem Schritt des automatischen und zeitgerechten Empfang des Triggersignals von einem regelbasierten System, das Vervollständigungsregeln enthält, die abgeleitet sind aus Eigenschaften der gedruckten Druckaufträge in dem Stapel.

10. Verfahren nach Anspruch 3, bei dem der Schritt des Auswerfens des Stapels den Schritt der Übertragung des Stapels von einem internen Ausgabehalter der Druckvorrichtung zu einem externen Ausgabehalter der Druckvorrichtung einschließt.

11. Verfahren nach Anspruch 10, mit den Schritt des vorübergehenden Stoppens des Auswurfes von Bögen von Druckaufträgen auf den Stapel in dem internen Ausgabehalter, um ein absichtliches Leeren des externen Ausgabehalters zu ermöglichen.

12. Drucksystem zum Drucken von Druckaufträgen (231-237) auf Bögen, welches Drucksystem (1) aufweist:
- eine Druckvorrichtung (3),
- eine Benutzerschnittstelle (7),
- einen Ausgabehalter (52), der an der Druckvorrichtung (3) angebracht und dazu konfiguriert ist, einen Stapel (55) von Bögen aufzunehmen, auf die mit der Druckvorrichtung (3) gedruckt wurde,
- einen Empfänger für digitale Druckaufträge, für den Empfang der Druckaufträge (231-237), die durch die Druckvorrichtung (3) gedruckt werden sollen,
- eine Druckersteuerung (37) zur Steuerung des Druckens der Druckaufträge (231-237) in den Ausgabehalter (52),
wobei die Druckersteuerung (37) dazu konfiguriert ist:
- ein Triggersignal zu empfangen, das Information enthält für eine Vervollständigung des Stapels (55), wobei die Vervollständigung des Stapels (55) auszuführen ist unmittelbar oder vor dem Start des Druckens eines nächsten Druckauftrages, der sich in der Druckauftragsschlange (23A) befindet, oder während der Druckauftrag, der aktuell gedruckt wird, vollständig gedruckt worden ist,
- eine Stapelzusammenfassung von Druckaufträgen, die in dem gedruckten Stapel (55) enthalten sind, von einem Speicher der Druckvorrichtung (3) zu empfangen,
- einen Zusammenfassungsauftrag zu erzeugen, der die Stapelzusammenfassung enthält, und
die Druckvorrichtung (3) dazu konfiguriert ist:
- bei Empfang des Triggersignals den Zusammenfassungsauftrag auf wenigstens einen Stapelabschlussbogen (56, 101, 111) auf der Oberseite des Stapels (55) zu drucken,
**dadurch gekennzeichnet, dass** die Druckersteuerung (37) dazu konfiguriert ist, wenn der zu vervollständigende Stapel einen Teil eines spezifischen Druckauftrags enthält, in der Zusammenfassung anzugeben, welcher Teil des spezifischen Druckauftrags in dem zur Vervollständigung vorgesehenen Stapel enthalten ist, und
entweder das Triggersignal von einer lokalen Benutzerschnittstelle empfangen wird, die Teil des Ausgabehalters ist, oder
die Benutzerschnittstelle (7) dazu konfiguriert ist, ein von einem Benutzer betätigbares Element zur Vervollständigung des Stapels aus dem Ausgabehalter anzuzeigen, und die Druckersteuerung dazu konfiguriert ist, das Triggersignal durch Aktivierung des von dem Benutzer betätigbaren Elements zu empfangen.

13. Nichtflüchiges Aufzeichnungsmedium mit von einem Computer ausführbaren Programmcode, der dazu konfiguriert ist, einen Computer anzuweisen, das Verfahren nach einem der Ansprüche 1 bis 11 auszuführen.

## Revendications

1. Procédé pour compléter une pile (55) de feuilles dans un support de sortie (52) fixé à un dispositif d'impression (3), le support de sortie (52) étant configuré pour supporter la pile (55) de feuilles imprimées par le dispositif d'impression (3) en fonction d'une pluralité de tâches d'impression (231 à 237) soumises au dispositif d'impression (3), le dispositif d'impression (3) comprenant une interface utilisateur (7) et un dispositif de commande d'impression (37) pour commander la réception de la pluralité de tâches d'impression dans une file d'attente de tâches d'impression (23A) et l'impression de la pluralité de tâches d'impression (231 à 237) en fonction de la file d'attente de tâches d'impression (23A), le procédé comprenant les étapes consistant :
- à recevoir, au moyen du dispositif de commande d'impression (37), un événement déclencheur comportant des informations pour un achèvement de la pile,
- à récupérer un résumé de pile de tâches d'impression contenu dans la pile imprimée à partir d'une mémoire du dispositif d'impression,
- à créer une tâche de résumé comprenant le résumé de pile, et
- à imprimer la tâche de résumé sur au moins une feuille de fin de pile (56, 101, 111) au sommet de la pile,
**caractérisé en ce que** le procédé comprend l'étape consistant
dans le cas où la pile destinée à être complétée comprend une partie d'une tâche d'impression spécifique, à indiquer dans le résumé quelle partie de la tâche d'impression spécifique est présente dans la pile prévue pour être complétée, et
soit l'étape de réception de l'événement déclencheur consiste à recevoir l'événement déclencheur en provenance d'une interface utilisateur locale qui fait partie du support de sortie, soit l'interface utilisateur est configurée pour afficher un élément pouvant être actionné par l'utilisateur pour compléter la pile à partir du support de sortie et l'étape de récupération de l'événement déclencheur comprend la sous- étape d'activation de l'élément pouvant être actionné par l'utilisateur.

2. Procédé selon la revendication 1, dans lequel l'achèvement de la pile est destiné à être réalisé immédiatement ou avant le début de l'impression d'une prochaine tâche d'impression se trouvant dans la file d'attente de tâches d'impression ou après que la tâche d'impression qui est à présent imprimée, a été complètement imprimée ou pendant l'impression de la tâche d'impression qui est à présent imprimée ou à un moment planifié dans le futur.

3. Procédé selon la revendication 1 ou 2, dans lequel le procédé comprend l'étape consistant, après l'impression de la tâche de résumé sur la ou les feuilles de fin de pile au sommet de la pile, à éjecter la pile du support de sortie, la pile comprenant la ou les feuilles de fin de pile.

4. Procédé selon l'une quelconque des revendications précédentes, dans lequel le procédé comprend l'étape de fourniture d'une fenêtre de confirmation sur une interface utilisateur du moteur d'impression afin de permettre à l'utilisateur de confirmer l'impression de la ou des feuilles de fin de pile avant l'achèvement de la pile.

5. Procédé selon l'une quelconque des revendications précédentes, dans lequel le résumé de pile comporte des informations concernant des identifiants de tâches d'impression dans la pile au moment voulu dans le temps de l'achèvement de la pile et/ou une hauteur de la pile au moment voulu dans le temps de l'achèvement de la pile et/ou un nombre de tâches d'impression dans la pile au moment voulu dans le temps de l'achèvement de la pile et/ou un nombre d'ensembles, d'enregistrement ou de pages d'une tâche d'impression partielle dans la pile au moment voulu dans le temps de l'achèvement de la pile et/ou un poids de la pile au moment voulu dans le temps de l'éjection de la pile et/ou une propriété de nom de client parmi les tâches d'impression dans la pile au moment voulu dans le temps de l'achèvement de la pile et/ou une taille de feuille maximale au moment voulu dans le temps de l'achèvement de la pile.

6. Procédé selon l'une quelconque des revendications précédentes, dans lequel une interface utilisateur pour le dispositif d'impression est configurée pour afficher la file d'attente de tâches d'impression et le procédé comprend les étapes consistant
- à afficher la file d'attente de tâches d'impression sur l'interface utilisateur, et
- à recevoir l'événement déclencheur à partir d'une action appliquée à la file d'attente de tâches d'impression affichée sur l'interface utilisateur.

7. Procédé selon la revendication 6, dans lequel l'action est une action de l'utilisateur.

8. Procédé selon l'une quelconque des revendications précédentes, dans lequel le procédé comprend l'étape consistant à détecter automatiquement que le support de sortie est plein au moyen de dispositifs de détection se trouvant dans le dispositif d'impression et à recevoir l'événement déclencheur grâce à la détection.

9. Procédé selon l'une quelconque des revendications précédentes, dans lequel le procédé comprend l'étape consistant à recevoir automatiquement et en temps utile l'événement déclencheur en provenance d'un système à base de règles comprenant des règles d'achèvement dérivées de propriétés des tâches d'impression imprimées dans la pile.

10. Procédé selon la revendication 3, dans lequel l'étape d'éjection de la pile comprend l'étape de transfert de la pile d'un support de sortie interne du dispositif d'impression à un support de sortie externe du dispositif d'impression.

11. Procédé selon la revendication 10, dans lequel le procédé comprend l'étape consistant à arrêter temporairement l'éjection de feuilles de tâches d'impression vers la pile dans le support de sortie interne de sorte à permettre un vidage délibéré du support de sortie externe.

12. Système d'impression (1) pour imprimer des tâches d'impression (231 à 237) sur des feuilles, le système d'impression (1) comprenant
- un dispositif d'impression (3),
- une interface utilisateur (7),
- un support de sortie (52) fixé au dispositif d'impression (3) configuré pour supporter une pile (55) de feuilles imprimées par le dispositif d'impression (3),
- un dispositif de réception de tâche d'impression numérique pour recevoir les tâches d'impression (231 à 237) qui doivent être imprimées par le dispositif d'impression (3),
- un dispositif de commande d'impression (37) pour commander l'impression des tâches d'impression (231 à 237) vers le support de sortie (52),
dans lequel le dispositif de commande d'impression (37) est configuré
- pour recevoir un événement déclencheur comportant des informations pour un achèvement de la pile (55), l'achèvement de la pile (55) devant être réalisé immédiatement ou avant le début de l'impression d'une prochaine tâche d'impression se trouvant dans la file d'attente de tâches d'impression (23A) ou pendant que la tâche d'impression qui est à présent imprimée, a été complètement imprimée,
- pour récupérer un résumé de pile de tâches d'impression contenu dans la pile imprimée (55) à partir d'une mémoire du dispositif d'impression (3),
- pour créer une tâche de résumé comprenant le résumé de pile, et
le dispositif d'impression (3) est configuré
- pour imprimer la tâche de résumé sur au moins une feuille de fin de pile (56, 101, 111) au sommet de la pile (55) lors de la réception de l'événement déclencheur,
**caractérisé en ce que** le dispositif de commande d'impression (37) est configuré, dans le cas où la pile destinée à être complétée comprend une partie d'une tâche d'impression spécifique, pour indiquer dans le résumé quelle partie de la tâche d'impression spécifique est présente dans la pile prévue pour être complétée, et
soit l'événement déclencheur est reçu d'une interface utilisateur locale qui fait partie du support de sortie, soit l'interface utilisateur (7) est configurée pour afficher un élément pouvant être actionné par l'utilisateur pour compléter la pile à partir du support de sortie et le dispositif de commande d'impression (37) est configuré pour recevoir l'événement déclencheur en activant l'élément pouvant être actionné par l'utilisateur.

13. Support d'enregistrement non transitoire comprenant un code de programme pouvant être exécuté par un ordinateur, configuré pour donner comme instruction à un ordinateur de réaliser le procédé selon l'une quelconque des revendications 1 à 11.
